# EUROPÄISCHE PATENTANMELDUNG

(11) **EP 2 876 342 A2**
(43) Veröffentlichungstag der Anmeldung: **27.05.2015**
(21) Anmeldenummer: 14180739.6
(22) Anmeldetag: 13.08.2014
(51) Int. Cl.: F16L 23/024, F16L 23/22, F16L 33/26

(54) **Verbindung mit einem gewellten Schlauchleitungselement**

(30) Priorität: 17.10.2013 DE 102013111462
(71) Anmelder: Witzenmann GmbH, 75175 Pforzheim (DE)
(72) Erfinder: Dr. Kämpfe, Andreas, 75173 Pforzheim (DE); Hartmann, Johannes, 75173 Pforzheim (DE); Tuncsik, Christoph, 76332 Bad Herrenalb (DE); Schweickert, Frank, 75248 Dürrn (DE); Schöninger, Daniel, 75173 Pforzheim (DE); Marx, Michael, 75031 Eppingen (DE); Hennig, Niels, 76227 Karlsruhe (DE)
(74) Vertreter: Lemcke, Brommer & Partner Patentanwälte Partnerschaft mbB

(57) **Zusammenfassung**

Vorgeschlagen wird eine Verbindung (1) zwischen einem zumindest abschnitt-weise gewellten Schlauchleitungselement (2) und einem Anschlussstück, um-fassend:
- ein Flanschelement (3), weiches ein Verbindungsende des Schlauchlei-tungselements (2) aufnimmt und umfänglich umgibt, wobei zwischen einer Außenumfangsfläche des Schlauchleitungselements (2) und einer Innenumfangsfläche des Flanschelements (3) eine ringförmige Ausnehmung (3b) ausgebildet ist, die in axialer Richtung auf einer dem Schlauchleitungsele-ment (2) abgewandten Seite im Bereich einer Öffnung öffnet;
- ein Gegenflanschelement (4), welches für ein Zusammenwirken mit dem Flanschelement (3) ausgebildet ist und eine erste axiale Vorsprungstruktur (4aa) aufweist, welche für ein Eingreifen im Bereich der Ausnehmung (3b) des Flanschelements (3) radial außerhalb des Schlauchleitungselements durch die Öffnung ausgebildet ist;
- ein Dichtelement (5), welches ringförmig ausgebildet und in der Ausnehmung (3b) des Flanschelements (3) aufgenommen ist, so dass es das Schlauchleitungselement (2) umgibt;

bei der eine Abmessung der Ausnehmung (3b), eine Abmessung des Dichtele-ments (5) und eine Abmessung der Vorsprungstruktur (4aa) derart aufeinander abgestimmt sind, dass bei einem Eingreifen der Vorsprungstruktur (4aa) im Bereich der Ausnehmung (3b) des Flanschelements (3) das Dichtelement (5) mit-tels der Vorsprungstruktur (4a) längsaxial komprimierbar ist, um in radialer Rich-tung dichtend an der Außenumfangsfläche des Schlauchleitungselements (2) in Anlage zu treten.

## Beschreibung

Die Erfindung betrifft eine Verbindung gemäß Anspruch 1 zwischen einem zumindest abschnittweise gewellten oder profilierten Schlauchleitungselement und einem Anschlussstück.

Aus der DE 295 18 712 U1 und aus der EP 0 775 865 A1 ist eine Anordnung zum Verbinden des Endes eines schraubenlinienförmig gewellten Metallrohres mit einem Anschlussstück bekannt, bei der ein Druckring auf das Ende des schraubenlinienförmig gewellten Metallrohres aufgeschraubt ist und mit einem axialen Vorsprung in eine entsprechende Ausnehmung des Anschlussstücks eingreift, um so einen in einer Dichtkammer angeordneten Dichtring aus Graphit durch axiales Gegenziehen von Druckring und Anschlussstück zu komprimieren, um eine dichte Verbindung zu erhalten.

Der Erfindung liegt die Aufgabe zugrunde, eine alternative Verbindung der genannten Art zu schaffen, welche sich zudem durch eine ausreichende Dichtheit und eine besondere Montagefreundlichkeit auszeichnet.

Diese Aufgabe wird erfindungsgemäß gelöst durch eine Verbindung mit den Merkmalen des Anspruchs 1. Vorteilhafte Weiterbildungen der erfindungsgemäßen Verbindung sind Gegenstand von Unteransprüchen.

Eine erfindungsgemäße Verbindung zwischen einem zumindest abschnittweise gewellten bzw. profilierten Schlauchleitungselement und einem Anschlussstück ist folgendermaßen charakterisiert: Das Anschlussstück bzw. die Verbindung umfasst:
- ein Flanschelement, welches ein Verbindungsende des Schlauchleitungselements aufnimmt und umfänglich umgibt, wobei zwischen einer Außenumfangsfläche des Schlauchleitungselements und einer Innenumfangsfläche des Flanschelements eine ringförmige Ausnehmung ausgebildet ist, die in axialer Richtung auf einer dem Schlauchleitungselement abgewandten Seite im Bereich einer Öffnung öffnet;
- ein Gegenflanschelement, welches für ein Zusammenwirken mit dem Flanschelement ausgebildet ist und eine erste axiale Vorsprungstruktur aufweist, welche für ein Eingreifen im Bereich der Ausnehmung des Flanschelements radial außerhalb des Schlauchleitungselements durch die Öffnung ausgebildet ist; und
- ein Dichtelement, welches ringförmig ausgebildet und in der Ausnehmung des Flanschelements aufgenommen ist, so dass es das Schlauchleitungselement umgibt.

Bei der erfindungsgemäßen Verbindung sind eine Abmessung der Ausnehmung, eine Abmessung des Dichtelements und eine Abmessung der Vorsprungstruktur derart aufeinander abgestimmt, dass bei einem Eingreifen der Vorsprungstruktur im Bereich der Ausnehmung des Flanschelements das Dichtelement mittels der Vorsprungstruktur längsaxial komprimiert bzw. komprimierbar ist, um in radialer Richtung dichtend an der Außenfläche des Schlauchleitungselements in Anlage zu treten.

Von dem weiter oben zitierten Stand der Technik grenzt sich die erfindungsgemäße Verbindung schon dadurch ab, dass die genannte ringförmige Ausnehmung, in welcher das Dichtelement angeordnet ist, in axialer Richtung auf der dem Schlauchleitungselement abgewandten Seite öffnet, während die Verhältnisse beim Gegenstand aus der DE 295 18 712 U1 gerade umgekehrt sind. Dies ermöglicht u. a. ein einfaches Einlegen des Dichtelements, weiches erfindungsgemäß nicht zwingend auf das Schlauchleitungselement aufschraubbar ausgebildet sein muss.

Gemäß einer ersten Weiterbildung der erfindungsgemäßen Verbindung ist vorgesehen, dass diese im Wesentlichen ohne axiale Stauchung des Schlauchleitungselements hergestellt ist.

Hier und im Folgenden bedeutet die Formulierung "im Wesentlichen", dass das betreffende Merkmal bis auf übliche Fertigungs- oder Designtoleranzen genau realisiert ist.

Eine andere Weiterbildung der erfindungsgemäßen Verbindung sieht vor, dass an dem Gegenflanschelement eine weitere Vorsprungstruktur vorgesehen ist, weiche die erste Vorsprungstruktur umgibt, wobei vorzugsweise die weitere Vorsprungstruktur direkt benachbart der ersten Vorsprungstruktur angeordnet ist. Höchst vorzugsweise weist die weitere Vorsprungstruktur eine gegenüber der ersten Vorsprungstruktur geringere Längsabmessung auf. Auf diese Weise ergibt sich insbesondere eine abgestufte Vorsprungstruktur an dem Gegenflanschelement, wobei die genannte weitere axiale Vorsprungstruktur dafür sorgt, dass ein (Haupt-)Kraftschluss beim Anziehen der Verbindung unmittelbar zwischen dem Flanschelement und dem Gegenflanschelement entsteht, so dass es durch Einwirken der Vorsprungstruktur des Dichtelements zu einer genau definierten Kompressionswirkung auf das Dichtelement kommt. Auf diese Weise ist die Verbindung in Bezug auf diese Dichtwirkung genau definiert und reproduzierbar ausgestaltet, da der (Haupt-)Kraftschluss nicht im Bereich der Paarung Vorsprungstruktur/Dichtelement auftritt.

Eine besonders vorteilhafte Weiterbildung der erfindungsgemäßen Verbindung sieht vor, dass radial innerhalb des Schlauchleitungselements ein Stützelement, insbesondere ein Stützring oder eine Stützhülse, auf Höhe der Ausnehmung angeordnet ist. Der Stützring oder die Stützhülse bzw. das Stützelement kann sich in Längsrichtung über die gesamte Länge der Ausnehmung erstrecken oder nur über einen Teil hiervon. Das Stützelement dient dazu, das Schlauchleitungselement gegenüber einer radialen Krafteinwirkung durch das Dichtelement zu stützen. Vorteilhafterweise erfolgt dies über einen großen Teil oder den größten der Längserstreckung des Dichtelements.

Auf diese Weise wird einer Verformung des Schlauchleitungselements entgegengewirkt, was die erreichbare Dichtheit und Langzeitstabilität der Verbindung verbessern kann.

Gemäß einer besonderen Weiterbildung der erfindungsgemäßen Verbindung kann das Stützelement einteilig mit dem restlichen Gegenflanschelement ausgebildet sein, um die Teileanzahl zu verringern. Es liegt jedoch auch im Rahmen der Erfindung, ein separates Stützelement vorzusehen, was eine Flexibilität der Verwendung erhöhen kann.

Eine wieder andere Weiterbildung der Erfindung sieht vor, für das Dichtelement innen und außen eben oder innen gewellt, vorzugsweise mit an das Schlauchleitungselement angepasster Wellung oder Profilierung ausgebildet ist. Allgemein lässt sich ausführen, dass das Dichtelement an seiner dem Schlauchleitungselement zugewandten Innenseite eine zu einer Profilierung des Schlauchleitungselements passende oder komplementäre Profilierung aufweisen kann. Ein solches Dichtelement lässt sich auch als "Formdichtung" bezeichnen und ermöglicht eine Abdichtung ohne größere Krafteinwirkung.

Eine andere Weiterbildung der erfindungsgemäßen Verbindung sieht vor, dass das Dichtelement aus Graphit, aus einem Elastomer, vorzugsweise Ethylen-Propylen-Dien-Kautschuk (EPDM), aus Blähton oder aus einem vergleichbaren, insbesondere keramische Material gebildet ist. Besonders bevorzugt ist die Verbindung von Materialien, die sich unter Wärmebeaufschlagung definiert ausdehnen, beispielsweise das Material Interam® des Herstellers 3M™ oder ein vergleichbares Material, beispielsweise und ohne Beschränkung Interam 5 NC (3M), Isomat AV5 (Unifrax), ibiden N2.3 (Ibiden) oder Maftec OBMF (Temtec). Insbesondere die keramischen Materialien sind bis hin zu relativ hohen Temperaturen im Bereich von 850 °C geeignet.

Eine wieder andere Weiterbildung der erfindungsgemäßen Verbindung sieht vor, dass das Schlauchleitungselement an seinem Verbindungsende nach Art eines Glattrohrs geglättet und dabei vorzugsweise auch endständig aufgeweitet ist, vorzugsweise vor Schaffung der Verbindung, höchst vorzugsweise zumindest im Bereich des Dichtelements. Auf diese Weise ist eine besonders gut dichtende, ebene Anlage zwischen Dichtelement und Schlauchleitungselement im Verbindungsbereich erreichbar. Das Dichtelement ist dann vorzugsweise als einfacher Ring mit ebenen Seitenflächen ausgebildet.

Noch eine andere Weiterbildung der Erfindung sieht vor, dass das Schlauchleitungselement zumindest an seinem Verbindungsende nach Art eines Ring- oder Wendelwellrohrs oder -schlauchs ausgebildet ist. Eine Ausbildung des Schlauchleitungselements als wendelgewellter Schlauch hat den besonderen Vorteil, dass insbesondere das Flanschelement oder auch das Dichtelement (bei Ausgestaltung als Formdichtung) nach Art einer Mutter auf das Schlauchleitungselement aufschraubbar ist bzw. sind, was die Handhabung erleichtern kann.

Im Zuge einer anderen Weiterbildung der erfindungsgemäßen Verbindung kann vorgesehen sein, dass das Dichtelement - wie bereits ausgeführt als Formdichtung ausgebildet ist mit einem zu dem Schlauchleitungselement im wesentlichen komplementären Profil an seiner Innenseite. Hierauf und auf die besonderen Vorteile dieser Ausgestaltung wurde weiter oben bereits hingewiesen.

Des Weiteren kann vorgesehen sein, dass die Vorsprungstruktur einstückig mit dem Gegenflanschelement ausgebildet ist, wodurch sich die Anzahl eingesetzter und bei Montage auf der Baustelle zu handhabender Einzelteile verringert.

Eine andere Ausgestaltung der erfindungsgemäßen Verbindung sieht vor, dass an einer Stirnfläche der Vorsprungstruktur ein weiterer axialer Vorsprung vorgesehen ist, vorzugsweise ringförmig umlaufend. Hierdurch lässt sich die (mechanische) Einwirkung des Gegenflanschelements auf das Dichtelement gezielt beeinflussen.

Im Zuge einer anderen Weiterbildung kann vorgesehen sein, dass eine Seitenfläche der Vorsprungstruktur, vorzugsweise eine Innenseitenfläche derselben, schräg zu einer Längsachse der Anordnung aus Flanschelement, Gegenflanschelement, Dichtelement und gegebenenfalls Stützelement sowie Schlauchleitungselement im Verbindungsbereich orientiert ist. Alternativ lässt sich von einer konischen Ausgestaltung der Vorsprungstruktur sprechen, wodurch das Gegenflanschelement mit seiner Vorsprungstruktur in der Lage ist, beim axialen Anziehen der Verbindung in radialer Richtung auf das Dichtelement einzuwirken.

Vorzugsweise ist in diesem Zusammenhang vorgesehen, dass das Dichtelement an einer seiner Seitenflächen, vorzugsweise seiner Außenseitenfläche, komplementär zu der Vorsprungstruktur des Gegenflanschelements ausgebildet ist. Dies entspricht einer konischen Ausgestaltung auch des Dichtelements, so dass das Vorsprungselement und das Dichtelement in der bereits beschriebenen Art und Weise beim Zusammenfügen der Anordnung dergestalt aufeinander einwirken, dass eine radiale Kraft nach innen auf das Dichtelement wirkt, um eine dichte Verbindung zu schaffen.

Im Zuge einer weiteren Ausgestaltung der erfindungsgemäßen Verbindung kann vorgesehen sein, dass das Schlauchleitungselement als Ringwellschlauch, als Wendelwellschlauch, als Wickelschlauch oder allgemein als Schlauch aus einem profilierten Band hergestellt ist. Hierauf wurde weiter oben bereits hingewiesen.

Außerdem kann vorgesehen sein, dass Flansch- und/oder Dichtelement ein Innengewinde aufweisen und so speziell auf das als Wendelwellschlauch ausgebildete Schlauchleitungselement aufschraubbar sind. Auch hierauf wurde weiter oben bereits hingewiesen.

Des Weiteren kann die erfindungsgemäße Verbindung bei entsprechender Weiterbildung dadurch gekennzeichnet sein, dass Flanschelement und Gegenflanschelement einander zugewandte plan-parallele Kontaktflächen aufweisen, die vorzugsweise zumindest abschnittweise miteinander in Anlage treten, um auf diese Weise eine möglichst stabile Verbindung zu gewährleisten.

Die erfindungsgemäße Verbindung und ihre Weiterbildungen eignen sich insbesondere zum Abdichten von wendelgewellten Metallschläuchen gegen Heißwasser und Dampf. Ein bevorzugter Einsatz findet sich in der Fermwärmeübertragung, wobei dauerhaft Temperaturen von 120°C und kurzzeitig bis zu 140°C auftreten. Die geforderte Dichtheit für derartige Anwendungen beträgt 10⁻³ mbar * I/s. Eine einfache Montage auf der Baustelle sollte möglich sein.

Die angestrebte Abdichtung mittels des Dichtelements kann zusätzlich auch im Bereich von Dichtflächen der Flansche (Flanschelement und Gegenflansch) erfolgen, wozu das Dichtelement entsprechend auszugestalten ist.

Weitere Eigenschaften und Vorteile der vorliegenden Erfindung ergeben sich aus der nachfolgenden Beschreibung von Ausführungsbeispielen anhand der Zeichnung.
- Figur 1: zeigt eine erste Ausgestaltung der erfindungsgemäßen Verbindung im Längsschnitt;
- Figur 2: zeigt eine zweite Ausgestaltung der erfindungsgemäßen Verbindung im Längsschnitt, links im geöffneten und rechts im angezogenen Zustand;
- Figur 3: zeigt eine dritte Ausgestaltung der erfindungsgemäßen Verbindung im Längsschnitt, links im geöffneten und rechts im angezogenen Zustand;
- Figur 4: zeigt teilweise und im Längsschnitt eine vierte Ausgestaltung der erfindungsgemäßen Verbindung; und
- Figur 5: zeigt teilweise und im Längsschnitt eine fünfte Ausgestaltung der erfindungsgemäßen Verbindung.

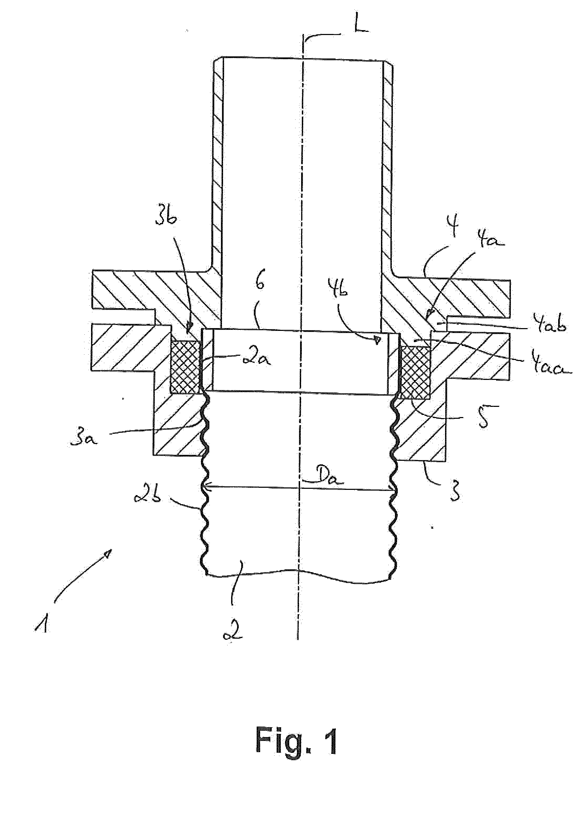

Figur 1 zeigt im Längsschnitt eine erste Ausgestaltung der erfindungsgemäßen Verbindung in ihrem angezogenen Zustand, wobei die Verbindung insgesamt mit dem Bezugszeichen 1 bezeichnet ist.

Bezugszeichen L bezeichnet die Längsachse der Verbindung 1 bzw. einer Anordnung, welche Anordnung ein gewelltes Schlauchleitungselement 2, ein Flanschelement 3, ein Gegenflanschelement 4, ein Dichtelement 5 sowie ein als separate Stützhülse ausgebildetes Stützelement 6 umfasst, welche allesamt konzentrisch bezüglich der Längsachse L angeordnet sind.

Das Schlauchleitungselement ist als wendelgewelltes Schlauchleitungselement 2 ausgebildet. Das Flanschelement 3 weist einen zentralen Durchbruch mit einem Innengewinde 3a auf, welchem Innengewinde 3a es auf das Schlauchleitungselement 2 aufschraubbar bzw. aufgeschraubt ist. Außerdem besitzt das Flanschelement 3 bei Bezugszeichen 3b eine zum Gegenflanschelement 4 hin bzw. zu einer von dem Schlauchleitungselement 2 abgewandten Seite hin öffnende Ausnehmung, in die das ringartig ausgebildete Dichtelement 5 eingelegt ist, so dass es sich zwischen dem Flanschelement 3 und dem Schlauchleitungselement 2 an dessen Verbindungsende befindet. Das Schlauchleitungselement 2 ist auf Höhe des Dichtelements 5 in einem Bereich 2a als Glattrohr ausgebildet bzw. vor Schaffung der in Figur 1 gezeigten Anordnung geglättet worden, was mit einer Aufweitung in etwa bis auf das Niveau des Außendurchmessers Da der Schlauchwellen 2b einhergeht. In diesem Bereich (Glattrohrbereich) ist radial innerhalb des Schlauchleitungselements 2 das bereits erwähnte Stützelement 6 angeordnet.

Das Gegenflanschelement 4 weist bei Bezugszeichen 4a eine abgestufte Vorsprungstruktur auf, deren erster, ringförmiger Vorsprung 4aa in seiner radialen Abmessung etwa der Breite des Dichtelements entspricht und in längsaxialer Richtung komprimierend auf dieses einwirkt. Der zweite Vorsprung 4ab, welcher den ersten Vorsprung 4aa radial umgibt und diesem gegenüber eine kleinere Längsabmessung aufweist, tritt mit dem Flanschelement 3 in Anlage und sorgt so für den (Haupt-)Kraftschluss zwischen Flanschelement 3 und Gegenflanschelement 4 und auf diese Weise für eine definierte Komprimierung des Dichtelements 5: Sobald der genannte Haupt-Kraftschluss zwischen Flanschelement 3 und Gegenflanschelement 4 über den zweiten Vorsprung 4ab erfolgt, ist im Wesentlichen keine weitere Komprimierung des Dichtelements 5 mehr möglich, und die Verbindung 1 hat eine definierte Dichtheit erreicht.

Das Dichtelement 5 kann in Graphit ausgebildet sein. Möglich ist jedoch auch eine Ausgestaltung des Dichtelements 5 in einem Elastomer (EPDM) oder einem Blähton-Material, beispielsweise Interam® oder vergleichbar.

Das Gegenflanschelement 4 besitzt bei Bezugszeichen 4b eine umlaufende Nut, die zur Aufnahme des Stützelements 6 und des Endes der Schlauchleitung 2 dient.

Mit Blick auf die Ausgestaltung gemäß Figur 1 ist das Vorsehen der weiteren Vorsprungstruktur 4ab grundsätzlich verzichtbar, so dass die Erfindung keinesfalls auf das Vorsehen zweier Vorsprungstrukturen 4aa, 4ab beschränkt ist.

Gemäß Figur 1 wird auf das gezeigte Ende des Schlauchleitungselements 2 das Flanschelement 3 mit dem zur Schlauchwellung passenden Innengewinde 3a aufgeschraubt. Durch Vorsehen der beschriebenen Ausnehmung 3b entsteht so um das Schlauchende herum eine Kammer, in welche das Dichtelement 5 in Form eines (glatten) Rings oder alternativ eine Formdichtung aus einem verformbaren Dichtmedium, sowie reinem Graphit eingelegt wird. Das Gegenflanschelement 4 wird über ein (nicht gezeigtes) Gewinde, über mehrere Schrauben oder in vergleichbarer Weise mit dem montierten Flanschelement 3 verschraubt. Dabei wird das Volumen der Kammer (Ausnehmung 3b), in welcher sich das Dichtelement 5 befindet, entsprechend reduziert, indem das Gegenflanschelement 4 mit seiner Vorsprungstruktur 4aa in dem Bereich der Ausnehmung 3b vordringt. Das Dichtelement 5 verformt sich axial und radial und legt sich an die Außenseite des Schlauchleitungselements 2 an. Das Gegenflanschelement 4, über welches das Dichtelement 5 verpresst wird, weist sowohl die Nut 4b auf, in die das Ende des Schlauchleitungselements 2 und das Stützelement 6 eintauchen kann bzw. können, als auch eine Abstützung des Schlauchleitungselements 2 von innen im Bereich der Dichtung, welche Abstützung gemäß Figur 1 durch das Stützelement 6 gebildet ist.

Es liegt im Rahmen der Erfindung, das Ende des Schlauchleitungselements 2 vor oder erst nach dem Aufschrauben des Flanschelements 3 zu glätten, wodurch in jedem Fall eine Abdichtung im Glattrohrbereich erfolgt. Auf diese Weise lässt sich eine bessere Stützwirkung erreichen, und höhere Anpassdrücke können auf den Dichtwerkstoff aufgebracht werden.

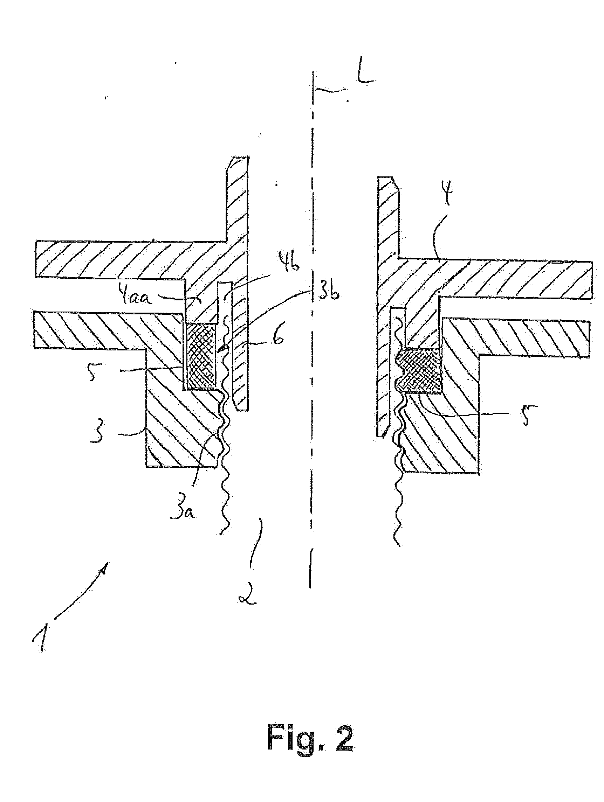

Wie bereits angedeutet, muss das Stützelement 6 nicht als separates Bauteil ausgeführt sein. Figur 2 zeigt eine Ausgestaltung der erfindungsgemäßen Verbindung 1, bei der das Stützelement 6 einstückig an das Gegenflanschelement 4 angeformt ist. Zwischen Stützelement 6 und Vorsprungstruktur 4aa befindet sich die bereits erwähnte Nut 4b zur Aufnahme des Endes der Schlauchleitung 2. Die Ausgestaltung gemäß Figur 2 weist keine zweite Vorsprungstruktur 4ab (vgl. Figur 1) auf; allerdings könnte eine solche auch bei der Ausgestaltung gemäß Figur 2 ohne weiteres vorgesehen werden. Ansonsten bezeichnen gleiche Bezugszeichen in den Figuren gleiche oder zumindest gleich wirkende Elemente.

Im linken Teil der Figur 2 ist die Verbindung 1 in ihrem gelösten Zustand mit nicht komprimiertem Dichtelement 5 gezeigt; im rechten Teil der Abbildung wurde die Verbindung 1 angezogen und das Dichtelement 5 entsprechend komprimiert, wobei es sich auch in radialer Richtung verformt hat und in die Wellung des Schlauchleitungselements 2 eingedrungen ist, um eine dichte Verbindung zu schaffen.

Das Ende des Schlauchleitungselements 2 wurde bei der Ausgestaltung gemäß Figur 2 nicht geglättet. Bei dem Dichtelement 5 gemäß Figur 2 kann es sich insbesondere um ein Dichtelement aus Graphit handeln.

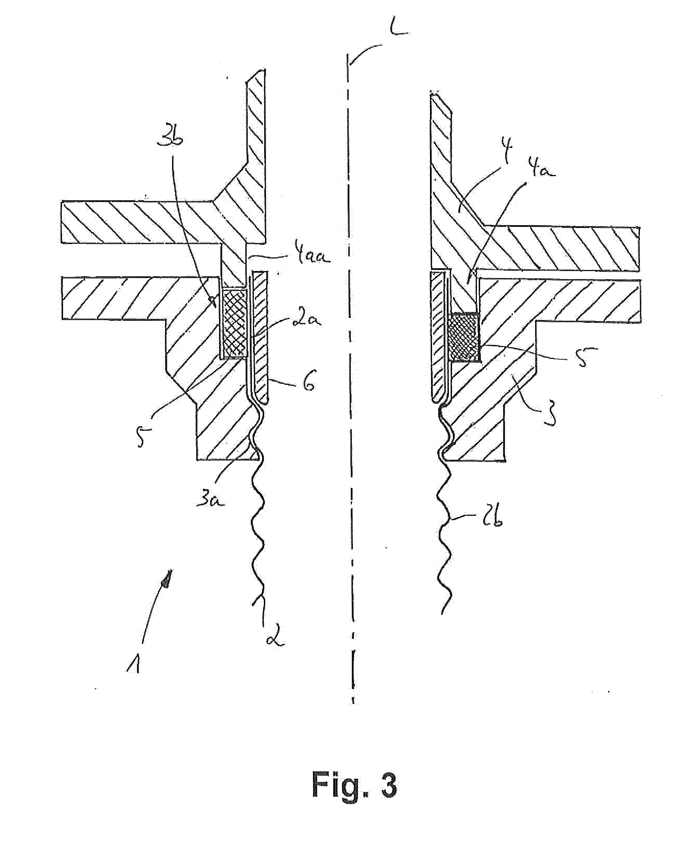

Figur 3 zeigt eine Variante der Ausgestaltung gemäß Figur 1, die sich von der Ausgestaltung in Figur 1 im Wesentlichen dadurch unterscheidet, dass keine zweite Vorsprungstruktur 4ab vorgesehen ist. Des Weiteren ist die Stützhülse 6 in axialer Richtung gegenüber der Ausgestaltung in Figur 1 verlängert ausgebildet. Ansonsten ist auf die Ausgestaltung gemäß Figur 3 vorliegend nicht weiter einzugehen.

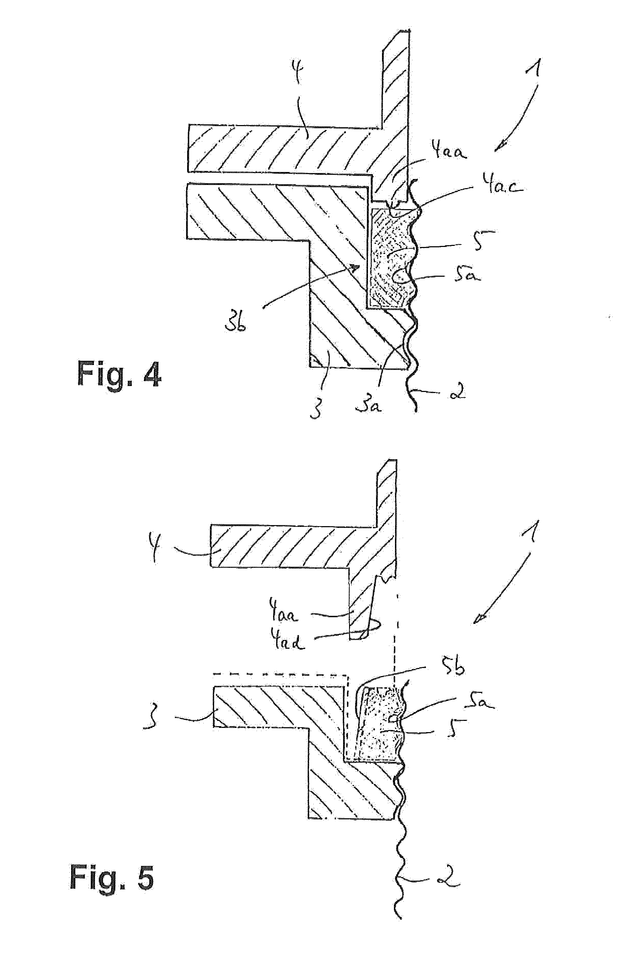

Figur 4 zeigt eine Ausgestaltung bei der das Dichtelement 5 als EPDM-Formdichtung ausgebildet ist. Hierbei weist das Dichtelement 5 eine spezielle Formgebung und ein Innengewinde 5a auf, welches der Kontur des Schlauchleitungselements 2 entspricht, so dass das Dichtelement 5 gemeinsam mit dem Flanschelement 3 auf das Schlauchleitungselement 3 aufschraubbar ist. Durch die spezielle Formgebung wird eine nur geringe Verformung des Dichtelements 5 benötigt, um die angestrebte Dichtwirkung zu erzielen. In Kombination mit dem relativ weichen elastomeren Dichtungswerkstoff (EPDM) sind deshalb nur geringe Montagekräfte erforderlich, was sich bei der Handhabung vorteilhaft auswirkt.

Außerdem kommt es nur zu einer geringen radialen Krafteinwirkung auf das Schlauchleitungselement 2, so dass - wie in Figur 4 angedeutet - gegebenenfalls ohne zusätzliches Stützelement gearbeitet werden kann. Eine solche Ausgestaltung ohne zusätzliches inneres Stützelement ist jedoch grundsätzlich nicht auf die Ausgestaltung gemäß Figur 4 eingeschränkt, sondern kann grundsätzlich auch bei den anderen gezeigten oder beschriebenen Ausführungsformen Verwendung finden.

Außerdem zeigt Figur 4 exemplarisch bei Bezugszeichen 4ac noch einen an der Stirnfläche der Vorsprungstruktur 4aa angeordneten weiteren axialen Vorsprung, der ringförmig umlaufend ausgebildet ist und spezielle, jedoch ohne Beschränkung, im Querschnitt eine Halbkreisform aufweist. Dieser zusätzliche Vorsprung 4ac ermöglicht eine besonders gute und definierte mechanische Einwirkung auf das Dichtelement 5, welches seinerseits eine komplementäre Ausnehmung aufweisen kann (vgl. Figur 5).

Schließlich zeigt Figur 5 im gelösten Zustand eine weitere Ausgestaltung der Verbindung 1; die gestrichelte Linie in Figur 5 deutet den angezogenen Zustand der Verbindung 1 an. Wesentlich bei der Ausgestaltung gemäß Figur 5 ist, dass die Vorsprungstruktur 4aa des Gegenflanschelements 4 nicht unmittelbar in Längsrichtung der Anordnung auf das Dichtelement 5 einwirkt, sondern dass die genannte Vorsprungstruktur 4aa eine schräg zur Längsachse der Anordnung orientierte Innenfläche 4ad aufweist, welche mit einer entsprechend schräg gestellten Außenfläche 5b des Dichtelements 5 konisch zusammenwirkt, so dass es gemäß der gestrichelten Linie in Figur 5 zu einer insbesondere radialen Komprimierung des Dichtelements 5 und zu einer Abdichtung gegenüber dem Schlauchleitungselement 2 sowie gegebenenfalls den Dichtflächen der Flansche (Flanschelement und Gegenflanschelement) kommt.

Insbesondere in diesem Zusammenhang bietet es sich an, das Dichtelement 5 nach Art einer Elastomer-, speziell EPDM-Formdichtung mit Innengewinde 5a auszubilden (vgl. Figur 4).

Zur Herstellung der Verbindung gemäß Figur 5 kann vorgesehen sein, dass auf das Ende des Schlauchleitungselements 2 zunächst das Flanschelement 3 aufgeschraubt wird. Anschließend wird das Dichtelement 5 aufgeschraubt. Das Dichtelement 5 besitzt - wie bereits ausgeführt - ein Innengewinde 5a, welches der Kontur des Schlauchleitungselements 2 entspricht. Anschließend werden das Flanschelement 5 und das Gegenflanschelement 4 in der gezeigten Art und Weise zusammengefügt, so dass das Gegenflanschelement 4 mit der schrägen Innenfläche 4ad der Vorsprungstruktur 4aa über die schräg stehende Außenfläche 5b des Dichtelements 5 auf letzteres einwirkt und dieses in der gezeigten Art und Weise komprimiert, so dass das Dichtelement 5 radial verpresst wird und sich an die Außenseite des Schlauchelements 2 dichtend anlegt.

Grundsätzlich ist diese Ausführungsform jedoch nicht auf die gezeigte Ausgestaltung des Dichtungselements 5 mit Innengewinde 5a beschränkt.

Neben den beschriebenen Materialien kann für das Dichtelement in allen Fällen alternativ auch ein Blähton-Material bzw. ein keramisches Material zum Einsatz kommen, welches bei Wärmebeaufschlagung definiert sein Volumen ändert und auf diese Weise die angestrebte Abdichtungswirkung gegenüber dem Schlauchleitungselement 2 erreicht bzw. verbessert.

Grundsätzlich ist es immer vorteilhaft, wenn das Dichtelement bei Ausbildung in EPDM ein Negativprofil zum Profil des Schlauchleitungselements aufweist, was beinhaltet, dass EPDM-Dichtelemente bei Ausgestaltung des Verbindungsendes als Glattrohr ebenfalls glatt ausgebildet sein können.

Die Erfindung eignet sich insbesondere für die bereits angesprochenen Fernwärmeanwendungen mit Durchmessern im Bereich DN 10 bis DN 300, vorzugsweise etwa DN 25 bis DN 100, höchst vorzugsweise etwa DN 25, DN 32, DN 40 oder DN 50.

## Patentansprüche

1. Verbindung (1) zwischen einem zumindest abschnittweise gewellten Schlauchleitungselement (2) und einem Anschlussstück, umfassend:
- ein Flanschelement (3), welches ein Verbindungsende des Schlauchleitungselements (2) aufnimmt und umfänglich umgibt, wobei zwischen einer Außenumfangsfläche des Schlauchleitungselements (2) und einer Innenumfangsfläche des Flanschelements (3) eine ringförmige Ausnehmung (3b) ausgebildet ist, die in axialer Richtung auf einer dem Schlauchleitungselement (2) abgewandten Seite im Bereich einer Öffnung öffnet;
- ein Gegenflanschelement (4), welches für ein Zusammenwirken mit dem Flanschelement (3) ausgebildet ist und eine erste axiale Vorsprungstruktur (4aa) aufweist, welche für ein Eingreifen im Bereich der Ausnehmung (3b) des Flanschelements (3) radial außerhalb des Schlauchleitungselements (2) durch die Öffnung ausgebildet ist;
- ein Dichtelement (5), welches ringförmig ausgebildet und in der Ausnehmung (3b) des Flanschelements (3) aufgenommen ist, so dass es das Schlauchleitungselement (2) umgibt;
bei der eine Abmessung der Ausnehmung (3b), eine Abmessung des Dichtelements (5) und eine Abmessung der Vorsprungstruktur derart aufeinander abgestimmt sind, dass bei einem Eingreifen der Vorsprungstruktur (4aa) im Bereich der Ausnehmung (3b) des Flanschelements (3) das Dichtelement (5) mittels der Vorsprungstruktur (4aa) längsaxial komprimierbar ist, um in radialer Richtung dichtend an der Außenumfangsfläche des Schlauchleitungselements (2) in Anlage zu treten.

2. Verbindung (1) nach Anspruch 1,
**dadurch gekennzeichnet, dass**
die Verbindung (1) im Wesentlichen ohne axiale Stauchung des Schlauchleitungselements (2) hergestellt ist.

3. Verbindung (1) nach Anspruch 1 oder 2,
**dadurch gekennzeichnet, dass**
an dem Gegenflanschelement (4) eine weitere axiale Vorsprungstruktur (4ab) vorgesehen ist, welche die erste Vorsprungstruktur (4ab) umgibt, wobei vorzugsweise die weitere Vorsprungstruktur (4aa) direkt benachbart der ersten Vorsprungstruktur (4aa) angeordnet ist, wobei höchst vorzugsweise die weitere Vorsprungstruktur (4ab) eine gegenüber der ersten Vorsprungstruktur (4aa) geringere Längsabmessung aufweist.

4. Verbindung (1) nach einem der Ansprüche 1 bis 3,
**dadurch gekennzeichnet, dass**
radial innerhalb des Schlauchleitungselements (2) ein Stützelement (6), insbesondere ein Stützring oder eine Stützhülse, etwa auf Höhe der Ausnehmung (3b) angeordnet ist, weiches Stützelement (6) vorzugsweise einteilig mit dem restlichen Gegenflanschelement (4) ausgebildet ist.

5. Verbindung (1) nach einem der Ansprüche 1 bis 4,
**dadurch gekennzeichnet, dass**
das Dichtelement (5) innen und außen eben oder innen gewellt mit vorzugsweise an das Schlauchleitungselement (2) angepasster Wellung ausgebildet ist.

6. Verbindung (1) nach einem der Ansprüche 1 bis 5,
**dadurch gekennzeichnet, dass**
das Dichtelement (5) aus Graphit, aus einem Elastomer, vorzugsweise Ethylen-Propylen-Dien-Kautschuk EPDM, aus Blähton oder aus einem vergleichbaren, insbesondere keramischen Material gebildet ist.

7. Verbindung (1) nach einem der Ansprüche 1 bis 6,
**dadurch gekennzeichnet, dass**
das Schlauchleitungselement (2) an seinem Verbindungsende nach Art eines Glattrohrs (2a) endständig aufgeweitet ist, vorzugsweise vor Schaffung der Verbindung (1), höchst vorzugsweise zumindest im Bereich des Dichtelements (5).

8. Verbindung (1) nach einem der Ansprüche 1 bis 6,
**dadurch gekennzeichnet, dass**
das Schlauchleitungselement (2) an seinem Verbindungsende nach Art eines Ring-, Wendelwellrohrs oder Wickelschlauchs ausgebildet ist.

9. Verbindung (1) nach einem der Ansprüche 1 bis 8,
**dadurch gekennzeichnet, dass**
das Dichtelement (5) als Formdichtung ausgebildet ist mit einem zu dem Schlauchleitungselement im Wesentlichen komplementären Profil (5a) an seiner Innenseite.

10. Verbindung (1) nach einem der Ansprüche 1 bis 9,
**dadurch gekennzeichnet, dass**
die Vorsprungstruktur (4aa, 4ab) einstückig mit dem Gegenflanschelement (4) ausgebildet ist.

11. Verbindung (1) nach einem der Ansprüche 1 bis 10,
**dadurch gekennzeichnet, dass**
an einer Stirnfläche der Vorsprungstruktur (4aa) noch ein weiterer axialer Vorsprung (4ac) vorgesehen ist, vorzugsweise ringförmig umlaufend.

12. Verbindung (1) nach einem der Ansprüche 1 bis 11,
**dadurch gekennzeichnet, dass**
eine Seitenfläche (4ad) der Vorsprungstruktur (4aa), vorzugsweise eine Innenseitenfläche, schräg zu einer Längsachse (L) der Anordnung orientiert ist, wobei vorzugsweise das Dichtelement (5) hinsichtlich zumindest einer seiner Seitenflächen, vorzugsweise seiner Außenseitenfläche (5b), komplementär zu der Vorsprungstruktur (4aa, 4ad) ausgebildet ist.

13. Verbindung (1) nach einem der Ansprüche 1 bis 12,
**dadurch gekennzeichnet, dass**
das Schlauchleitungselement (2) als Ringwellschlauch oder als Wendelwellschlauch oder allgemein als Schlauch aus einem profiliertem Band hergestellt ist.

14. Verbindung nach einem der Ansprüche 1 bis 13,
**dadurch gekennzeichnet, dass**
Flanschelement (3) und/oder Dichtelement (5) ein Innengewinde (3a; 5a) aufweisen und auf das als Wendelwellschlauch oder Wickelschlauch ausgebildete Schlauchleitungselement (2) aufschraubbar sind.

15. Verbindung nach einem der Ansprüche 1 bis 14,
**dadurch gekennzeichnet, dass**
Flanschelement (3) und Gegenflanschelement (4) einander zugewandte plan-parallele Kontaktflächen aufweisen, die vorzugsweise miteinander in Anlage treten.
